# FASCICULE DE BREVET EUROPEEN

(11) **EP 4 264 406 B1**
(45) Date de publication et mention de la délivrance du brevet: **18.11.2026**
(21) Numéro de dépôt: 21840890.4
(22) Date de dépôt: 17.12.2021
(51) Int. Cl.: G06F 3/0488, G06Q 20/18, G06Q 20/32, G07F 17/42, G06F 3/041, G06F 3/048

(54) **PLATEFORME MULTISERVICES INTERACTIVE ET MODULAIRE, PROCÉDÉS D'UTILISATION ET DE PARAMÉTRAGE ASSOCIÉS**
INTERAKTIVE MODULARE MEHRDIENSTPLATTFORM, ZUGEHÖRIGE VERFAHREN ZUR VERWENDUNG UND PARAMETEREINSTELLUNG
INTERACTIVE MODULAR MULTI-SERVICE PLATFORM, ASSOCIATED METHODS OF USE AND PARAMETER SETTING

(30) Priorité: 18.12.2020 FR 2013716
(43) Date de publication de la demande: 25.10.2023
(73) Titulaire: Revenue Collection Systems France SAS, 91220 Plessis-Pâté (FR)
(72) Inventeur: WARNITZ, Philippe, 91229 BRETIGNY SUR ORGE CEDEX (FR); DUMAY, Nicolas, 91229 BRETIGNY SUR ORGE CEDEX (FR)
(74) Mandataire: Lavoix
(86) Numéro de dépôt international: PCT/EP2021/086602
(87) Numéro de publication internationale: WO 2022/129578

(56) Documents cités:
- WO-A1-2018/107001

## Description

La présente invention concerne une plateforme de communication d'information(s) à un utilisateur, du type comprenant :
- un serveur d'application configuré pour mettre en œuvre au moins une application,
- un panneau pour l'affichage d'image(s) liée(s) à la ou chaque application,
- un ensemble de périphériques comprenant un projecteur d'image(s) destiné à projeter la ou chaque image sur le panneau et un capteur de sélection, configuré pour détecter une sélection, par l'utilisateur, d'une zone du panneau, et
- un serveur de gestion de la plateforme interfaçant le serveur d'application et l'ensemble de périphériques et comprenant un ensemble de pilote(s) informatique(s) pour communiquer avec l'ensemble de périphériques.

US 10,353,572 B2 décrit une telle plateforme et plus particulièrement une plateforme de vente de tickets à un utilisateur.

WO 2018/07001 A1 décrit plateforme de communication d'information(s) à un utilisateur.

La plateforme comprend un projecteur, apte à projeter des images sur un mur. Les images projetées sont liées à une application de billettique. La plateforme comprend également un capteur tactile permettant de détecter le contact de la main de l'utilisateur sur le mur et des périphériques liés à l'application de billettique.

Cependant, la plateforme est dédiée seulement à une application de billettique figée. L'inclusion d'une nouvelle application et/ou de nouveaux périphériques requiert une refonte de la plateforme.

Le but de l'invention est donc de proposer une plateforme de communication modulable et évolutive d'information(s) à l'utilisateur.

À cet effet, l'invention a pour objet une plateforme de communication d'information(s) selon la revendication 1.

Suivant des modes particuliers de réalisation, la plateforme est selon l'une quelconque des revendications 2 à 8.

L'invention a également pour objet un procédé de paramétrage de la plateforme selon la revendication 9.

Ces caractéristiques et avantages de l'invention apparaîtront plus clairement à la lecture de la description qui va suivre, donnée uniquement à titre d'exemple non limitatif et faite en référence aux dessins annexés, sur lesquels ;
- [Fig. 1] la figure 1 est une représentation partielle d'une zone de guichets d'une station de métro comprenant la plateforme de communication,
- [Fig. 2] la figure 2 est une représentation schématique de la plateforme de la figure 1, montrant des communications internes à la plateforme et entre la plateforme et un utilisateur,
- [Fig. 3] la figure 3 est une représentation d'un panneau de la plateforme de communication de la figure 1, sur lequel sont affichées des images par un projecteur d'images,

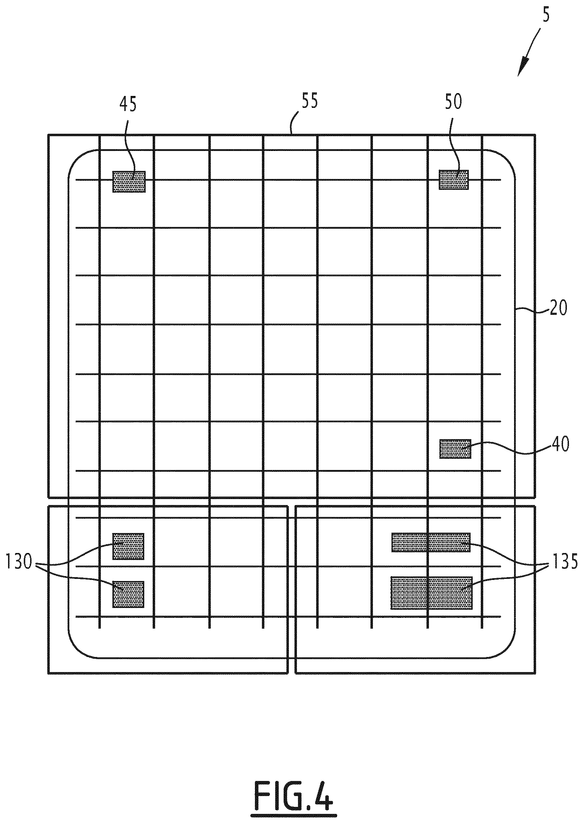

- [Fig. 4] la figure 4 est une représentation d'une grille de fixation, située derrière le panneau de la figure 3, la grille de fixation portant des périphériques,
- [Fig. 5] la figure 5 est un organigramme d'un procédé de paramétrage de la plateforme de communication des figures 1 à 4, et
- [Fig. 6] La figure 6 est un organigramme d'un procédé d'utilisation, lors d'une interaction avec un utilisateur, de la plateforme de communication des figures 1 à 4.

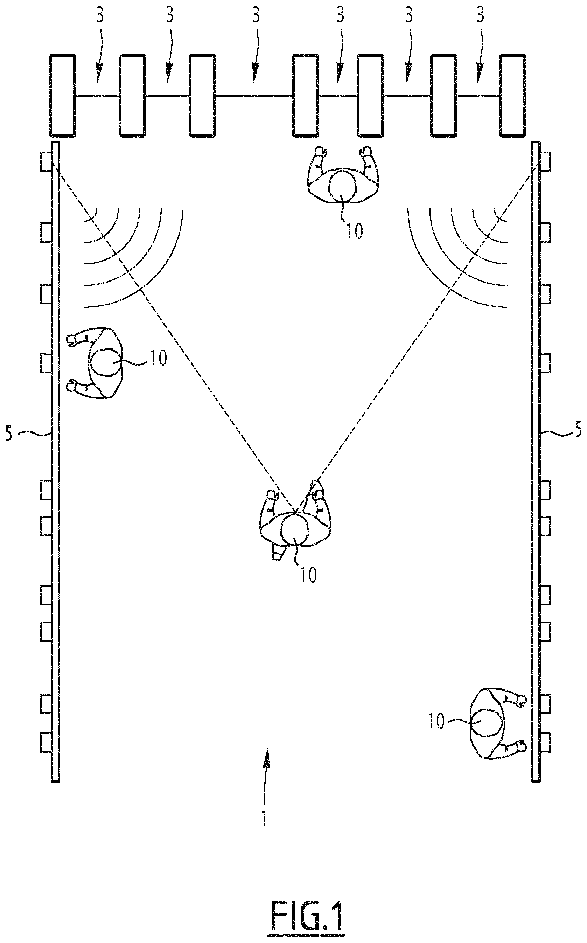

Comme partiellement visible sur la figure 1, une zone de guichets 1, par exemple d'une station de métro qui comprend des portillons 3 et des plateformes de communication d'information(s) 5.

Les portillons 3 sont propres à s'ouvrir si un utilisateur 10 possède un titre de transport valide.

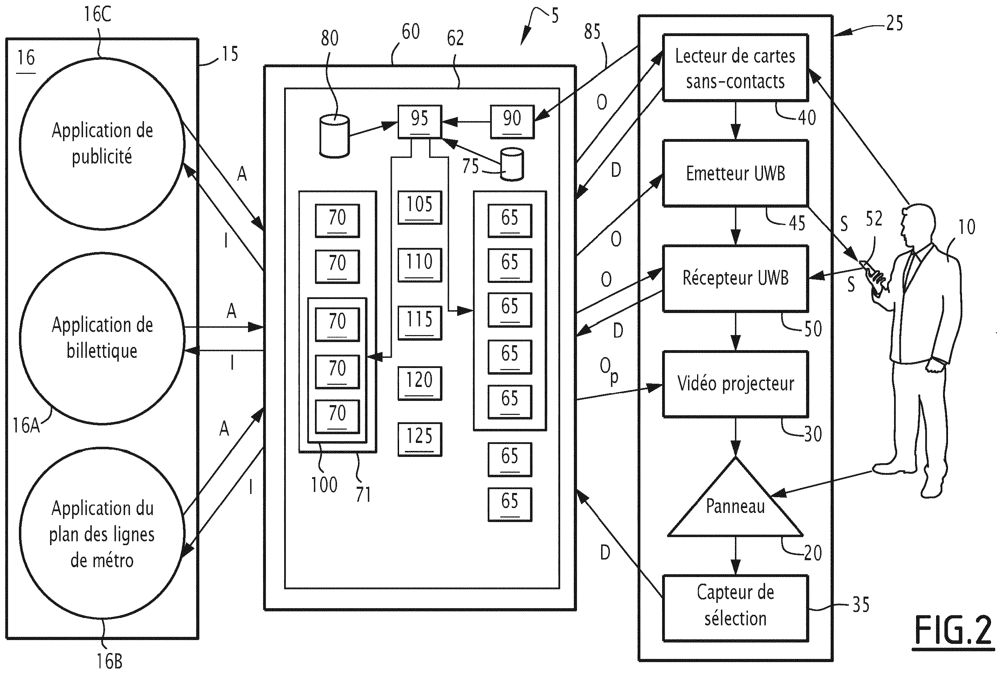

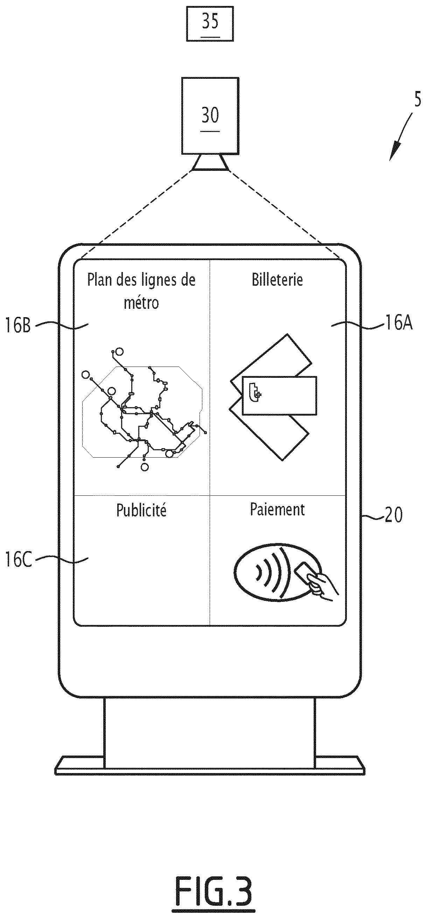

En référence aux figures 2 et 3, chaque plateforme de communication d'information(s) 5 comprend un serveur d'application 15 configuré pour mettre en œuvre au moins une application 16. Le serveur d'application 15 est par exemple configuré pour mettre en œuvre une application de billettique 16A, une application de plan des lignes de métro 16B et une application de publicité 16C.

La plateforme de communication 5 comprend également un panneau 20 pour l'affichage d'images liées à la ou chaque application 16.

Un ensemble de périphériques 25 permet l'affichage d'images sur le panneau 20 et une interaction entre l'utilisateur 10 et chaque application 16. L'ensemble de périphériques 25 comprend un projecteur d'image(s) 30 propre à projeter des images liées à chacune des applications 16. L'ensemble de périphériques 25 comprend également un capteur de sélection 35, configuré pour détecter une sélection, par l'utilisateur 10, d'une zone du panneau 20.

Un lecteur de cartes sans-contact 40 est inclus dans l'ensemble de périphériques 25 pour permettre le paiement, par l'utilisateur 10, d'un bien ou d'une prestation proposé par une application 16 respective.

Des émetteur 45 et récepteur 50 Ultra Large Bande, aussi appelés UWB (de l'anglais *Ultra Wide Band),* sont également inclus dans l'ensemble de périphérique 25 pour permettre des communications entre les applications 16 et un téléphone intelligent (de l'anglais *smartphone)* de l'utilisateur 10.

En variante ou en complément facultatif, les émetteur 45 et récepteur 50 utilisent une technologie ultrason ou une technologie de communication par champ proche, aussi appelé NFC (de l'anglais *Near Field Communication).*

En variante également, les émetteur 45 et récepteur 50 sont configurés pour communiquer avec un dispositif portable de l'utilisateur 10, tel qu'une montre, un bracelet connecté ou un collier connecté.

Le lecteur de cartes sans-contact 40, l'émetteur 45 et le récepteur 50 sont fixés à une grille de fixation 55, positionnée derrière le panneau 20. Autrement dit, le panneau 20 est intercalé entre le projecteur d'image(s) 30 et la grille de fixation 55.

Un serveur de gestion de plateforme 60 interface le serveur d'application 15 et l'ensemble de périphériques 25. Ainsi, chaque périphérique 25 est directement relié au serveur de gestion de plateforme 60 qui est lui-même directement relié au serveur de d'application 15.

Le serveur de gestion de plateforme 60 est configuré pour mettre en œuvre un gestionnaire de plateforme 62, aussi appelé gestionnaire 62. Le gestionnaire 62 comprend par exemple plusieurs moteurs, certains propres à être intégrés à la plateforme 60, d'autres propres à être localisés en dehors de la plateforme.

Le gestionnaire 62 comporte un ensemble de pilotes informatiques 65 pour communiquer avec les périphériques 25 et des services 70 propres à faire l'objet d'un appel A par une application 16. Les services 70 sont regroupés sous la forme d'une liste 71 de services 70. Le gestionnaire 62 comprend en outre une table de correspondance 75 de pilote 65 et une table de correspondance 80 de services 70, liant respectivement un identifiant 85 de périphérique 25 à un pilote informatique 65 et à au moins un service 70.

Chaque pilote informatique 65, aussi appelé pilote 65, est un moteur de traduction permettant de lier le gestionnaire 62 à un périphérique 25 respectif. Chaque pilote 65 est propre à convertir un premier signal issu du gestionnaire 62 en un deuxième signal interprétable par le périphérique 25 associé, et inversement.

La liste 71 de service 70 comprend notamment :
- l'affectation d'un périphérique 25 à une application 16,
- la projection d'images, dite partielles, sur le panneau 20,
- l'émission d'un signal par un périphérique 25 d'émission,
- la gestion de l'état de certains périphériques (mise sous tension, état opérationnel, extinction, mise en veille, ...),
- la réservation de zones pré déterminées pour des affichages,
- la possibilité de changer d'affichage et de configuration pour permettre des utilisations de la plateforme par 1, 2, 3 ou plusieurs utilisateurs en parallèle,
- l'émission d'un son, en présence d'un haut-parleur dans la plateforme 5,
- la capture d'un son, en présence d'un microphone dans la plateforme 5,
- la capture d'un flux vidéo, en présence d'une caméra dans la plateforme 5,
- la détection d'un objet à proximité d'une partie de la plateforme 60, en présence d'un capteur de présence d'objet dans la plateforme 5,
- la localisation d'un objet à proximité d'une partie de la plateforme 60, en présence d'un capteur de distance dans la plateforme, et
- le recours à une capacité de support à distance (de l'anglais *Call-center*).

Le service de projection d'images partielles propose par exemple de projeter, sur le panneau 20, un texte défilant et/ou clignotant, une image fixe, une vidéo, un QR-code, ou des informations en représentation en deux dimensions (2D) ou trois dimensions (3D).

Le gestionnaire 62 comprend en outre un moteur 90 d'acquisition de l'identifiant 85 de chaque périphérique 25 et un moteur 95 d'association d'un pilote informatique 65 et de service(s) 70 à chaque périphérique 25.

Le moteur d'association 95 est configuré pour choisir le pilote 65 indiqué dans la table de correspondance 75 de pilote informatique 65, à partir de l'identifiant 85 reçu. Le moteur d'association 95 est également configuré pour associer à chaque périphérique 25 un ou plusieurs services 70, à partir de l'identifiant 85 et de la table de correspondance 80 de service 70. Par exemple, le moteur d'association 95 est configuré pour associer au lecteur de carte sans-contact 40 le service de paiement, présent dans la liste 71 de service 70, selon la table de correspondance 80 de service 70.

Le moteur d'association 95 est en outre, configuré pour déterminer un groupe 100 de services 70 comme comprenant chaque service 70 associé à au moins un périphérique 25.

Le gestionnaire 62 comporte en outre un moteur 105 de réception de signaux depuis chacun des périphériques 25 et/ou depuis chaque application 16, un moteur 110 de conversion de signaux entre chaque application 16 et chaque périphérique 25, un moteur 115 d'envoi de données aux applications 16 ou aux périphériques 25, un moteur 120 de génération d'une image et un moteur de calcul 125.

Le moteur de réception 105 est configuré pour recevoir, depuis une application 16, un appel A d'un service 70 du groupe de service 100.

Le moteur de réception 105 est également configuré pour recevoir, depuis un périphérique 25, une donnée D.

Le moteur de conversion 110 est configuré pour convertir, à l'aide d'un pilote 65 respectif, chaque appel A reçu en un ordre O pour le périphérique 25 associé et chaque donnée reçue D en une information I pour l'application associée.

Le moteur d'envoi 115 est configuré pour envoyer les ordres O et les informations I respectivement aux périphériques 25 et aux applications 16.

Ainsi, dans le cadre de la vente de titres de transport, le moteur de réception 105 est configuré pour recevoir un appel A du service de paiement, depuis l'application de billettique 16A. Le moteur de conversion 110 est configuré pour convertir cet appel A en un ordre O d'acquisition de signaux magnétique pour le lecteur de carte sans-contact 40. Le moteur d'envoi 115 est configuré pour envoyer cet ordre O au lecteur de carte sans-contact 40.

Plus précisément, le moteur d'envoi 115 et le moteur de réception 105 sont par exemple des interfaces de programmation applicative, aussi nommée API (de l'anglais *Application Programming Interface)* apte à recevoir ou envoyer des données dans différents formats ou langages tel que : le langage XML ( de l'anglais eXtentable Markup Language) ou le langage JSON (de l'anglais *JavaScript Object Notation),* selon une technique connue en soi.

En complément facultatif, les moteurs de réception 105 et d'envoi 115 sont connectés à un service web. Les moteurs de réception 105 et d'envoi 115 sont alors configurés pour requérir du service web, des prestations telles que des prestations de paiement en ligne.

Le moteur de génération 120 est configuré pour générer une image, dite complète, à partir d'images, dites partielles, reçues depuis une ou plusieurs applications 16, et pour transmettre un ordre de projection O_{P} de l'image complète au projecteur d'images 30.

Pour cela, le moteur de génération 120 est configuré pour allouer statiquement ou dynamiquement des espaces d'affichage à chaque application.

Le moteur de calcul 125 est configuré pour, en cas de réception de données relatives à une sélection par l'utilisateur 10 d'une zone du panneau 20, depuis le capteur de sélection 35, déterminer à quelle application 16 la zone sélectionnée se réfère. Le moteur de calcul 125 est configuré pour, dans une telle situation, transmettre au moteur d'envoi 115 une information I de sélection, par l'utilisateur 10 de la zone du panneau 20, à envoyer à l'application 16 concernée.

Le moteur de calcul 125 est configuré pour déterminer la zone sélectionnée à partir des données issues du capteur de sélection 35 en s'appuyant sur des paramètres correctifs, issus d'un calibrage du capteur de sélection 35. Des données de calibration géométrique forment des points de repère pour le moteur de calcul 125 et définissent les paramètres correctifs. Le moteur de calcul 125 est configuré pour, en cas de détection, par le capteur de sélection 35, d'une sélection d'un point par l'utilisateur 10, déterminer des coordonnées du point sélectionné, grâce au calibrage géométrique du système d'imagerie, en appliquant aux coordonnées du point sélectionné une fonction de transformation basée sur les paramètres correctifs.

La plateforme de communication 5 comprend en outre un bloc d'alimentation 130 pour l'alimentation de chacun des périphériques 25 ainsi qu'un bloc de communication 135 pour la communication des périphériques 25 avec le serveur de gestion de plateforme 60 via les moteurs d'acquisition 90 et de réception 105. Ces blocs 130 et 135 sont fixés sur la grille de fixation 55.

Le bloc de communication 135 comprend par exemple une pluralité de ports Ethernet ainsi que de la connectique.

Selon un mode de réalisation, le moteur d'acquisition 90, le moteur d'association 95, le moteur de réception 105, le moteur de conversion 110, le moteur d'envoi 115, le moteur de génération 120 et le moteur de calcul 120 sont réalisés chacun sous la forme d'un logiciel stocké dans un ou plusieurs moyens de stockage (tels qu'un disque dur ou un disque flash) et implémenté par un ou plusieurs processeurs, mémoire (RAM) et autres composants d'ordinateurs connus en soi. Ces composants sont alors inclus dans le même serveur de gestion 60 ou dans différents ordinateurs/serveurs. Dans ce dernier cas, les ordinateurs/serveurs sont connectés par un réseau local ou global, au serveur de gestion 60.

En outre, ou de manière alternative, au moins une partie de ces moteurs 90, 95, 105, 110, 115, 120 et 125 prend la forme, au moins partiellement, d'un composant électronique indépendant, tel que par exemple un circuit logique programmable.

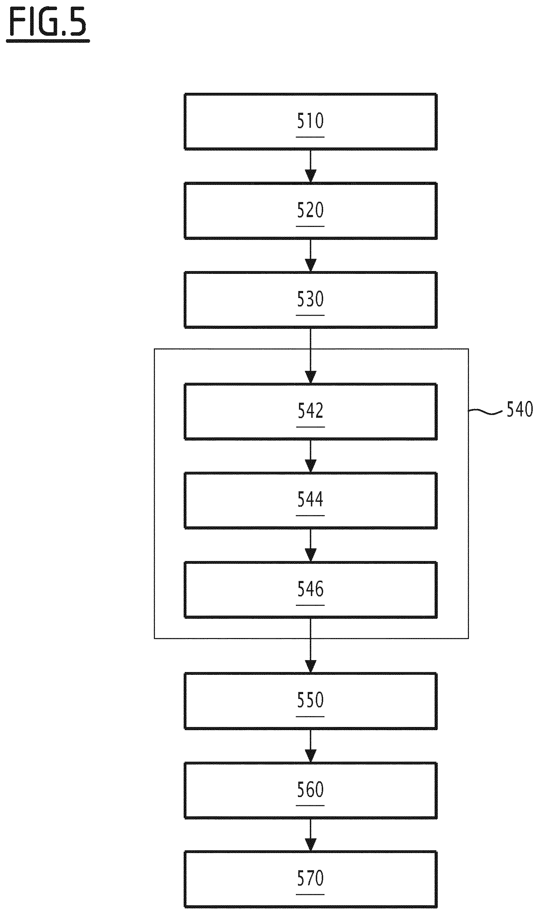

Le paramétrage de la plateforme 5 va maintenant être décrit en référence à la figure 5.

Lors d'une première étape d'initialisation 510, l'ensemble de périphériques 25 est installé. Plus particulièrement, le lecteur de carte sans-contact 40, l'émetteur 45 et le récepteur 50 sont fixés sur la grille de fixation 55, à une localisation prédéfinie. Puis, toujours lors de l'étape d'initialisation 70, chacun des périphériques 25, y compris le projecteur d'image(s) 30 et le capteur de sélection 35, sont connectés au serveur de gestion de plateforme 60 qui est lui-même directement relié au serveur d'application 15.

Toujours lors de l'étape d'initialisation 510, le gestionnaire 62 reçoit également, depuis un opérateur, des données géométriques sur le panneau 20 comme sa hauteur et sa largeur. Le gestionnaire 62 reçoit également depuis l'opérateur, la localisation de chacun des périphériques 25 par rapport au panneau 20.

Lors d'une étape d'acquisition 520, le gestionnaire 62, mis en œuvre par le serveur de gestion de plateforme 60, acquiert, via son moteur d'acquisition 90, l'identifiant 85 de chaque périphérique 25.

Lors d'une étape de détermination 530, le gestionnaire 62 détermine le groupe de services 100 à présenter au serveur d'application 15. Pour cela, le moteur d'association 95 associe, à chaque périphérique 25, le pilote 65 correspondant à l'identifiant 85 dans la table de correspondance 75 de pilote informatique 65.

En outre, lors de l'étape de détermination 530, le moteur d'association 95 détermine dans la liste 71 de services 70, quels services 70 associer à chaque périphérique 25. Pour cela, le moteur d'association 95 forme le groupe 100 de service(s) 70 comme comprenant chaque service 70 correspondant à l'identifiant 85 de chaque périphérique 25, dans la table de correspondance 80 de service 70.

Ainsi, dans le cadre de la vente de titres de transport, lors de l'étape de détermination 530, le moteur d'association 95 associe :
- au lecteur de carte sans-contact 40, le service 70 de paiement sans-contact,
- au projecteur d'image(s) 30, le service 70 de projection d'images partielles sur le panneau 20,
- à l'émetteur 45, le service 70 d'émission d'un signal,
- au récepteur 50, le service 70 de réception d'un signal et
- à chaque périphérique 25, le service 70 de gestion des états desdits périphériques 25 (mise sous tension, extinction, mise en veille, ...).

Lors d'une étape de calibrage 540, le gestionnaire 62 calibre le projecteur d'images 30 ainsi que le capteur de sélection 35.

Pour cela, lors d'une sous-étape d'affichage 542, le gestionnaire 62 envoie un ordre de projection Oₚ, d'une image prédéfinie, au projecteur d'image(s) 30. L'image prédéfinie comprend par exemple un symbole localisé au niveau d'un point de repère respectif prédéfini dont les coordonnées sont connues par le gestionnaire 62.

Puis, lors d'une sous-étape d'obtention 544, le capteur de sélection 35 détecte une sélection, par l'utilisateur 10, du point de repère affiché. Le capteur de sélection 35 transmet alors au moteur de réception 105, une donnée D correspondant aux coordonnées détectées du point de repère.

Ensuite, lors d'une sous-étape de traitement 546, le gestionnaire 62 traite, via son moteur de calcul 125, les données D reçues depuis le capteur de sélection 35. Lors de cette sous-étape 546, le moteur de calcul 125 calibre les paramètres correctifs correspondants à une différence entre les coordonnées transmises par les données D du capteur de sélection 35, et les coordonnées prédéfinies du point de repère projeté par le projecteur d'image(s) 30.

L'étape de calibrage 540 est réitérée plusieurs fois, de préférence plus de trois fois.

L'homme du métier comprend alors que lors de l'étape de calibrage 540, des références sont prises (typiquement en répétant des séquences telle que : affichage d'une petite zone colorée sur une partie de l'image projetée effectué en demandant à l'utilisateur de simuler une sélection au niveau de la zone colorée). A l'issue de ces opérations, le moteur de calcul 125 dispose d'une correspondance entre des zones affichées et des actions de sélection. Il peut à partir d'une sélection, calculer les coordonnées et les caractéristiques de la zone affichée correspondante. L'homme du métier comprend donc que cette approche permet d'associer à une action de sélection, une zone de la surface projetée (et de la partie de l'application qui est affichée à cet endroit).

Lors d'une étape d'appel 550, le gestionnaire 62 reçoit un premier appel A₁ du service 70 d'affichage d'images partielles depuis chaque application 16, via son moteur de réception 105.

Lors d'une étape de génération 560, le moteur de génération 120 génère une image complète à partir des images partielles. L'image complète est par exemple animée.

Pour cela, le moteur de génération 120 alloue un espace de projection à chaque image partielle pour former une image complète. Cette allocation est prédéfinie pour chaque application.

Alternativement cette allocation est dynamique, notamment dans le cadre de messages d'information défilant qui annonceraient, par exemple, aux utilisateurs 10 qu'il y a des perturbations sur le réseau ou signaleraient une actualité particulière (conditions météorologiques spécifiques, alerte pollution, objet abandonné, alerte enlèvement, ...) ou rappelleraient des consignes ou des recommandations (concernant le respect de consignes sanitaire ou sécurité, le port de masque en situation de pandémie, la vigilance qu'il convient d'avoir par rapport aux objets transportés pour éviter des vols, ...). Dans un tel cas, aucun espace de projection n'est alloué de manière prédéfini à ces messages. Ainsi, en cas, de diffusion d'un de ces messages, le moteur de calcul 125 alloue spontanément un espace de projection, empiétant le temps de la diffusion du message, sur les espaces alloués aux applications 16.

En outre, lors de l'étape de génération 560, le moteur de génération 120 inclue dans l'image complète, un symbole de paiement sans-contact, localisé au niveau du lecteur de carte sans-contact 40.

Enfin, lors d'une étape d'affichage 570, le gestionnaire 62 transmet un ordre de projection Oₚ au projecteur d'image 30, qui projette l'image complète sur le panneau 20.

En variante, non-représentée, l'étape de calibrage 540 est mise en œuvre par le capteur de sélection 35 lui-même et non par le gestionnaire 62.

En cas d'ajout d'un périphérique 25, telle qu'une caméra ou un haut-parleur, les étapes d'acquisition 520 et de détermination 530 sont réitérées à partir de ce périphérique 25.

En cas d'ajout d'une application 16, les étapes d'appel 550, de génération 560 et d'affichage 570 sont réitérées.

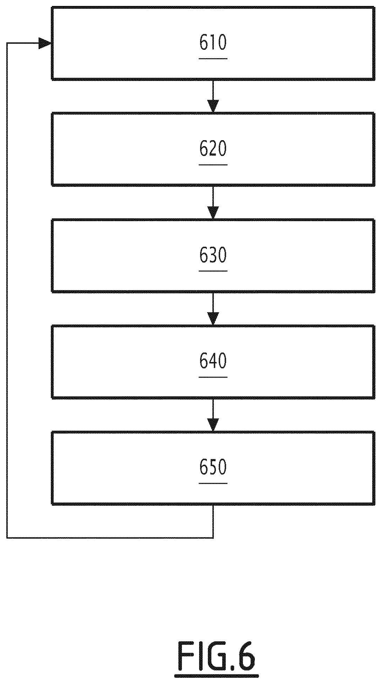

Le fonctionnement de la plateforme 5 en cours d'utilisation par l'utilisateur 10 va maintenant être décrit en référence à la figure 6.

Initialement, la plateforme 5 est paramétrée selon le procédé de paramétrage décrit ci-dessus.

Lors d'une étape de détection 610, le capteur de sélection 35 détecte un appui de l'utilisateur 10 sur le panneau 20, dont les coordonnées correspondent à une case d'achat de titre de transport, projetée via le projecteur d'images 30.

Lors d'une étape de transmission 620, le capteur de sélection 35 envoie la donnée D comprenant les coordonnées captées du point sélectionné, au moteur de réception 105. Le moteur de conversion 110 convertit, via le pilote 65 du capteur de sélection 35, la donnée D dans un langage interprétable par le gestionnaire 62.

Puis, toujours lors de l'étape de transmission 620, le moteur de calcul 125 détermine à quelle application 16 le point capté correspond, par application aux coordonnées de la donnée D d'une transformation basée sur les paramètres correctifs, selon une technique de calibration géométrique de système d'imagerie connue en soi.

Toujours lors de l'étape de transmission 620, le moteur de calcul 125 calcule les cordonnées dans un repère propre à l'image partielle de l'application 16 correspondante, i.e. l'application de billettique 16A. Ces coordonnées forment une information I.

Puis, toujours lors de l'étape de transmission 620, le moteur d'envoi 115 envoie l'information I à l'application de billettique 16a.

Puis, lors d'une étape de réception 630, le gestionnaire 62 reçoit, via son moteur de réception 105, un deuxième appel A₂ du service 70 d'affectation du lecteur de carte sans-contact 40, depuis de l'application de billettique 16a. Le moteur de réception 105 reçoit également un troisième appel A₃ du service 70 d'affichage d'image(s) par le projecteur d'images 30. Le troisième appel A₃ comprend une image comportant une case incluant la mention suivante : *« Merci de passer votre carte de paiement devant le symbole de paiement sans-contact ».*

Lors d'une étape de formation 640, le moteur de génération 120 forme, une nouvelle image complète à partir de l'image partielle transmise dans le troisième appel A₃, de manière analogue à l'étape de génération 560 du procédé de paramétrage.

Lors d'une étape de mise en œuvre 650, le gestionnaire 62 transmet un ordre d'affectation O, via son moteur d'envoi 110, au lecteur de carte 40 indiquant l'affectation dudit lecteur 40 à l'application de billettique 16a. Pour cela, le gestionnaire 62 convertit, via son moteur de conversion 105, le deuxième appel A₂ en un l'ordre d'affectation O, via le pilote 65 associé au lecteur de carte 40.

En outre, lors de l'étape de mise en œuvre 650, le gestionnaire 62 envoie, via son moteur d'envoi 110, un ordre de projection Oₚ, de l'image complète générée par le moteur de génération 120, suite au troisième appel A₃.

Suite à l'étape de mise en œuvre 650, l'utilisateur 10 est invité par le message projeté sur le panneau 20 à placer sa carte de paiement en face du symbole représentant le paiement sans-contact, afin de procéder au paiement de son titre de transport.

Suite à cela, les étapes du procédé, à savoir les étapes 610 à 650, sont réitérées avec d'autres appels A et d'autres ordres O.

Selon une variante de réalisation non-représentée, la plateforme 5 comprend plusieurs lecteurs de carte sans-contact 40 latéralement réparties sur la grille de fixation 55. Le module de génération 120 est alors configuré pour générer une image complète comprenant plusieurs répliques d'une même image partielle, par exemple une image partielle issue de l'application de billettique 16A. Les répliques sont latéralement réparties à une même hauteur. Ceci permet alors à plusieurs utilisateurs 10 d'utiliser la plateforme 5 simultanément.

En complément ou alternativement à la variante ci-dessus, le module de génération 120 est configuré pour générer l'image complète comprenant plusieurs répliques de la même image partielle, latéralement réparties, à des hauteurs différentes. Ceci permet alors à chaque utilisateur 10 d'utiliser la partie du panneau la plus approprié à sa taille.

Ainsi, la plateforme 5 est modulable et évolutive puisqu'elle comprend la capacité à intégrer de nouveaux périphériques 25 et/ou de nouvelles applications 16.

## Revendications

1. Plateforme (5) de communication d'information(s) à un utilisateur (10), la plateforme (5) comprenant :
- un serveur d'application (15) configuré pour mettre en œuvre au moins une application (16),
- un panneau (20) pour l'affichage d'image(s) liée(s) à la ou chaque application (16),
- un ensemble de périphériques (25) comprenant un projecteur d'image(s) (30) destiné à projeter la ou chaque image sur le panneau (20) et un capteur de sélection (35), configuré pour détecter une sélection, par l'utilisateur (10), d'une zone du panneau (20), et
- un serveur de gestion de la plateforme (60) interfaçant le serveur d'application (15) et l'ensemble de périphériques (25) et comprenant un ensemble de pilote(s) informatique(s) (65) pour communiquer avec l'ensemble de périphériques (25),
**caractérisée en ce que** le serveur de gestion de la plateforme (60) comprend un gestionnaire de plateforme (62) disposant d'une liste (71) de service(s) (70), de l'ensemble de pilote(s) informatique(s) (65), d'une table de correspondance (80) de service (70) et d'une table de correspondance (75) de pilote(s) informatique(s) (65), le gestionnaire de plateforme (62) comportant en outre un ensemble de moteur de traitement (90, 95, 105, 110, 115, 120, 125) configuré pour :
- recevoir et convertir un appel (A) d'un service (70), depuis une application (16), en un ordre (O), et envoyer l'ordre (O) à au moins un périphérique (25), ou
- recevoir et convertir une donnée (D), depuis un périphérique (25), en une information (I), et envoyer l'information (I) à la ou au moins l'une des applications (16),
l'ensemble de moteur de traitement (90, 95, 105, 110, 115, 120, 125) étant également configuré pour, si un périphérique (25) est ajouté à l'ensemble de périphériques (25), recevoir un identifiant (85) de ce périphérique (25) et associer un pilote informatique (65) et au moins un service (70) à ce périphérique (25), à partir des tables de correspondance (75 ; 80) de pilote(s) informatique(s) (65) et de service(s) (70),
le gestionnaire (62) étant configuré pour, lors d'une étape de calibrage (540), envoyer au projecteur d'image(s) (30), un ordre de projection (OP) d'une image prédéfinie, l'image prédéfinie comprenant un symbole localisé au niveau un point de repère respectif prédéfini dont les coordonnées sont connues par le gestionnaire (62), le projecteur d'image(s) (30) étant propre à afficher l'image prédéfini,
le capteur de sélection (35) étant propre à détecter une sélection, par l'utilisateur (10), du point de repère affiché,
le gestionnaire (62) étant propre à transmettre, à un moteur de réception (105) compris dans l'ensemble de moteur de traitement (90, 95, 105, 110, 115, 120, 125), depuis le capteur de sélection (35), une donnée (D) correspondant aux coordonnées détectées du point de repère affiché sélectionné par l'utilisateur (10),le gestionnaire (62) étant propre à traiter la donnée (D) par calibrage de paramètres correctifs correspondants à une différence entre les coordonnées détectées du point de repère sélectionné et les coordonnées connues par le gestionnaire de plateforme (62).

2. Plateforme (5) selon la revendication 1, **caractérisée en ce que** la plateforme (5) comprend en outre une grille (55) pour la fixation d'une partie de l'ensemble de périphériques (25), le panneau (20) étant alors intercalé entre la grille (55) et le projecteur d'image(s) (30).

3. Plateforme (5) selon l'une quelconque des revendications précédentes, **caractérisée en ce que** la liste (71) de service(s) (70) comprend :
- la projection d'une image dite partielle, sur le panneau (20), et
- l'affectation d'un périphérique (25) à une application (16).

4. Plateforme (5) selon la revendication 3, **caractérisée en ce que** le gestionnaire de plateforme (62) est configuré pour générer une image dite complète, à partir d'image(s) partielle(s) reçue(s) depuis au moins une application (16), et pour transmettre un ordre de projection (O_{P}) de l'image complète au projecteur d'image(s) (30).

5. Plateforme (5) selon l'une quelconque des revendications précédentes, **caractérisée en ce que** l'ensemble de moteur de traitement (90, 95, 105, 110, 115, 120, 125) est configuré pour :
- recevoir et convertir un appel (A) d'un service (70), depuis une application (16), en un ordre (O), et envoyer l'ordre (O) à au moins un périphérique (25), et
- recevoir et convertir une donnée (D), depuis un périphérique (25), en une information (I), et envoyer l'information (I) à la ou au moins l'une des applications (16).

6. Plateforme (5) selon l'une quelconque des revendications précédentes, **caractérisée en ce que** l'ensemble de moteur de traitement (90, 95, 105, 110, 115, 120, 125) est configuré pour, si des données (D) correspondant à une sélection par l'utilisateur (10) d'une zone du panneau (20) sont reçues, alors :
- déterminer à quelle application (16) la zone sélectionnée se réfère, et
- envoyer à l'application (16) correspondante, une information (I) de sélection, par l'utilisateur (10), de la zone du panneau (20).

7. Plateforme (5) selon l'une quelconque des revendications précédentes, **caractérisée en ce que** le serveur d'application (15) met en œuvre une application de billettique (16A).

8. Plateforme (5) selon l'une quelconque des revendications précédentes, **caractérisée en ce que** l'ensemble de périphériques (25) comprend un dispositif de paiement sans-contact (40) et un émetteur Ultra Large Bande (45).

9. Procédé de paramétrage de la plateforme (5) selon l'une quelconque des revendications précédentes, le procédé étant mis en œuvre par le gestionnaire de plateforme (62) et étant **caractérisé en ce qu'**il comprend les étapes successives suivantes :
- acquisition (520), depuis chaque périphérique (25) relié au serveur de gestion de plateforme (60), d'un identifiant (85) du périphérique (25), et
- détermination (530) d'un groupe (100) de services aptes à être appelés, à partir d'un identifiant (85) de chaque périphérique (25),
le procédé comprenant en outre une étape de calibrage (540) comportant les sous étapes-suivantes :
- affichage (542) d'une image prédéfinie par envoi, au projecteur d'image(s) (30), d'un ordre de projection (OP) de l'image prédéfinie, l'image prédéfinie comprenant un symbole localisé au niveau un point de repère respectif prédéfini dont les coordonnées sont connues par le gestionnaire (62) ;
- détection (544), par le capteur de sélection (35) d'une sélection, par l'utilisateur (10), du point de repère affiché ;
- transmission (544), à un moteur de réception (105) compris dans l'ensemble de moteur de traitement (90, 95, 105, 110, 115, 120, 125), depuis le capteur de sélection (35), d'une donnée (D) correspondant aux coordonnées détectées du point de repère affiché sélectionné par l'utilisateur (10) ; et
- traitement (546) de la donnée (D) par calibrage de paramètres correctifs correspondants à une différence entre les coordonnées détectées du point de repère sélectionné et les coordonnées connues par le gestionnaire de plateforme (62).

## Patentansprüche

1. Kommunikationsplattform (5) zur Übermittlung von Informationen an einen Benutzer (10), wobei die Plattform (5) umfasst:
- einen Anwendungsserver (15), der dazu konfiguriert ist, mindestens eine Anwendung (16) zu implementieren,
- ein Panel (20) zur Anzeige von Bild(ern), die mit der oder jeder Anwendung (16) verbunden sind,
- eine Peripheriegerätemenge (25), umfassend einen Bildprojektor (30), der dazu bestimmt ist, das oder jedes Bild auf das Panel (20) zu projizieren, und einen Auswahlfühler (35), der dazu konfiguriert ist, eine Auswahl eines Bereichs des Panels (20) durch den Benutzer (10) zu erfassen, und
- einen Plattformverwaltungserver (60), der den Anwendungsserver (15) und die Peripheriegerätemenge (25) verbindet und eine Menge von Softwaretreibern (65) umfasst, um mit der Peripheriegerätemenge (25) zu kommunizieren,
**dadurch gekennzeichnet, dass** der Plattformverwaltungserver (60) einen Plattformverwalter (62) umfasst, der über eine Liste (71) von Dienst(en) (70), die Menge von Softwaretreibern (65), eine Dienst(70)-Zuordnungstabelle (80) und eine Softwaretreiber(65)-Zuordnungstabelle (75) verfügt, wobei der Plattformverwalter (62) ferner eine Menge von Verarbeitungseinheiten (90, 95, 105, 110, 115, 120, 125) umfasst, die dazu konfiguriert ist:
- einen Aufruf (A) eines Dienstes (70) von einer Anwendung (16) zu empfangen und in einen Befehl (O) umzuwandeln und den Befehl (O) an mindestens ein Peripheriegerät (25) zu senden, oder
- eine Angabe (D) von einem Peripheriegerät (25) zu empfangen und in eine Information (I) umzuwandeln und die Information (I) an die oder mindestens eine der Anwendungen (16) zu senden,
wobei die Menge von Verarbeitungseinheiten (90, 95, 105, 110, 115, 120, 125) ferner dazu konfiguriert ist, wenn ein Peripheriegerät (25) zu der Peripheriegerätemenge (25) hinzugefügt wird, eine Kennung (85) dieses Peripheriegeräts (25) zu empfangen und einen Softwaretreiber (65) und mindestens einen Dienst (70) diesem Peripheriegerät (25) ausgehend von den Zuordnungstabellen (75; 80) von Softwaretreibern (65) und von Diensten (70) zuzuordnen,
wobei der Verwalter (62) dazu konfiguriert ist, während eines Kalibrierungsschritts (540) einen Projektionsbefehl (OP) eines vordefinierten Bildes an den Bildprojektor (30) zu senden, wobei das vordefinierte Bild ein Symbol umfasst, das an einem jeweiligen vordefinierten Referenzpunkt lokalisiert ist, dessen Koordinaten dem Verwalter (62) bekannt sind, wobei der Bildprojektor (30) dazu geeignet ist, das vordefinierte Bild anzuzeigen,
wobei der Auswahlfühler (35) dazu geeignet ist, eine Auswahl des angezeigten Referenzpunkts durch den Benutzer (10) zu erfassen,
wobei der Verwalter (62) dazu geeignet ist, einer in der Menge von Verarbeitungseinheiten (90, 95, 105, 110, 115, 120, 125) umfassten Empfangseinheit (105) von dem Auswahlfühler (35) eine Angabe (D) zu übermitteln, die den erfassten Koordinaten des von dem Benutzer (10) ausgewählten angezeigten Referenzpunkts entspricht, wobei der Verwalter (62) dazu geeignet ist, die Angabe (D) durch Kalibrierung von Korrekturparametern zu verarbeiten, die einer Differenz zwischen den erfassten Koordinaten des ausgewählten Referenzpunkts und den dem Plattformverwalter (62) bekannten Koordinaten entsprechen.

2. Plattform (5) nach Anspruch 1, **dadurch gekennzeichnet, dass** die Plattform (5) ferner ein Gitter (55) zur Befestigung eines Teils der Peripheriegerätemenge (25) umfasst, wobei das Panel (20) dann zwischen dem Gitter (55) und dem Bildprojektor (30) angeordnet ist.

3. Plattform (5) nach einem der vorhergehenden Ansprüche, **dadurch gekennzeichnet, dass** die Liste (71) von Dienst(en) (70) umfasst:
- die Projektion eines sogenannten Teilbildes auf das Panel (20), und
- die Zuordnung eines Peripheriegeräts (25) zu einer Anwendung (16).

4. Plattform (5) nach Anspruch 3, **dadurch gekennzeichnet, dass** der Plattformverwalter (62) dazu konfiguriert ist, ein sogenanntes vollständiges Bild ausgehend von Teilbild(ern), die von mindestens einer Anwendung (16) empfangen werden, zu erzeugen und einen Projektionsbefehl (O_{P}) des vollständigen Bildes an den Bildprojektor (30) zu übertragen.

5. Plattform (5) nach einem der vorhergehenden Ansprüche, **dadurch gekennzeichnet, dass** die Menge von Verarbeitungseinheiten (90, 95, 105, 110, 115, 120, 125) dazu konfiguriert ist:
- einen Aufruf (A) eines Dienstes (70) von einer Anwendung (16) zu empfangen und in einen Befehl (O) umzuwandeln und den Befehl (O) an mindestens ein Peripheriegerät (25) zu senden, und
- eine Angabe (D) von einem Peripheriegerät (25) zu empfangen und in eine Information (I) umzuwandeln und die Information (I) an die oder mindestens eine der Anwendungen (16) zu senden.

6. Plattform (5) nach einem der vorhergehenden Ansprüche, **dadurch gekennzeichnet, dass** die Menge von Verarbeitungseinheiten (90, 95, 105, 110, 115, 120, 125) dazu konfiguriert ist, wenn Angaben (D), die einer Auswahl eines Bereichs des Panels (20) durch den Benutzer (10) entsprechen, empfangen werden, dann:
- zu bestimmen, auf welche Anwendung (16) sich der ausgewählte Bereich bezieht, und
- an die entsprechende Anwendung (16) eine Information (I) über die Auswahl des Bereichs des Panels (20) durch den Benutzer (10) zu senden.

7. Plattform (5) nach einem der vorhergehenden Ansprüche, **dadurch gekennzeichnet, dass** der Anwendungsserver (15) eine Ticketing-Anwendung (16A) implementiert.

8. Plattform (5) nach einem der vorhergehenden Ansprüche, **dadurch gekennzeichnet, dass** die Peripheriegerätemenge (25) eine kontaktlose Zahlungsvorrichtung (40) und einen Ultrabreitband-Sender (45) umfasst.

9. Verfahren zur Parametrierung der Plattform (5) nach einem der vorhergehenden Ansprüche, wobei das Verfahren durch den Plattformverwalter (62) implementiert wird und **dadurch gekennzeichnet ist, dass** es die folgenden aufeinanderfolgenden Schritte umfasst:
- Erfassen (520) einer Kennung (85) des Peripheriegeräts (25) von jedem mit dem Plattformverwaltungserver (60) verbundenen Peripheriegerät (25), und
- Bestimmen (530) einer Gruppe (100) von Diensten, die aufgerufen werden können, ausgehend von einer Kennung (85) jedes Peripheriegeräts (25),
wobei das Verfahren ferner einen Kalibrierungsschritt (540) umfasst, der die folgenden Unterschritte umfasst:
- Anzeigen (542) eines vordefinierten Bildes durch Senden eines Projektionsbefehls (OP) des vordefinierten Bildes an den Bildprojektor (30), wobei das vordefinierte Bild ein Symbol umfasst, das an einem jeweiligen vordefinierten Referenzpunkt lokalisiert ist, dessen Koordinaten dem Verwalter (62) bekannt sind;
- Erfassen (544) einer Auswahl des angezeigten Referenzpunkts durch den Benutzer (10) durch den Auswahlfühler (35);
- Übertragung (544) an einen Empfangsmotor (105), der in der Menge von Verarbeitungseinheiten (90, 95, 105, 110, 115, 120, 125) enthalten ist, von dem Auswahlsensor (35) eines Datums (D), das den erfassten Koordinaten des vom Benutzer (10) ausgewählten angezeigten Referenzpunkts entspricht; und
- Verarbeitung (546) des Datums (D) durch Kalibrierung von Korrekturparametern, die einer Differenz zwischen den erfassten Koordinaten des ausgewählten Referenzpunkts und den dem Plattformverwalter (62) bekannten Koordinaten entsprechen.

## Claims

1. Platform (5) for communicating information(s) to a user (10), the platform (5) comprising:
- an application server (15) configured to implement at least one application (16),
- a panel (20) for displaying image(s) linked to the or each application (16),
- a set of peripherals (25) comprising an image projector (30) intended to project the or each image onto the panel (20) and a selection sensor (35), configured to detect a selection, by the user (10), of an area of the panel (20), and
- a platform management server (60) interfacing with the application server (15) and the set of peripherals (25) and comprising a set of computer driver(s) (65) for communicating with the set of peripherals (25),
**characterized in that** the platform management server (60) comprises a platform manager (62) having a list (71) of service(s) (70), the set of computer driver(s) (65), a service (70) mapping table (80) and a computer driver(s) (65) mapping table (75), the platform manager (62) further comprising a set of processing engines (90, 95, 105, 110, 115, 120, 125) configured to:
- receive and convert a call (A) for a service (70), from an application (16), into an order (O), and send the order (O) to at least one peripheral (25), or
- receive and convert data (D), from a peripheral (25), into information (I), and send the information (I) to the or at least one of the applications (16),
the set of processing engines (90, 95, 105, 110, 115, 120, 125) also being configured to, if a peripheral (25) is added to the set of peripherals (25), receive an identifier (85) of this peripheral (25) and associate a computer driver (65) and at least one service (70) with this peripheral (25), from the mapping tables (75; 80) of computer driver(s) (65) and service(s) (70),
the manager (62) being configured to, during a calibration step (540), send to the image projector (30) a projection order (OP) of a predefined image, the predefined image comprising a symbol located at a respective predefined reference point whose coordinates are known by the manager (62), the image projector (30) being capable of displaying the predefined image,
the selection sensor (35) being capable of detecting a selection, by the user (10), of the displayed reference point,
the manager (62) being capable of transmitting, to a receiving engine (105) comprised in the set of processing engines (90, 95, 105, 110, 115, 120, 125), from the selection sensor (35), data (D) corresponding to the detected coordinates of the displayed reference point selected by the user (10), the manager (62) being capable of processing the data (D) by calibrating corrective parameters corresponding to a difference between the detected coordinates of the selected reference point and the coordinates known by the platform manager (62).

2. Platform (5) according to claim 1, **characterized in that** the platform (5) further comprises a grid (55) for fastening a part of the set of peripherals (25), the panel (20) then being interposed between the grid (55) and the image projector (30).

3. Platform (5) according to any one of the preceding claims, **characterized in that** the list (71) of service(s) (70) comprises:
- the projection of a so-called partial image, onto the panel (20), and
- the assignment of a peripheral (25) to an application (16).

4. Platform (5) according to claim 3, **characterized in that** the platform manager (62) is configured to generate a so-called complete image, from partial image(s) received from at least one application (16), and to transmit a projection order (O_{P}) of the complete image to the image projector (30).

5. Platform (5) according to any one of the preceding claims, **characterized in that** the set of processing engines (90, 95, 105, 110, 115, 120, 125) is configured to:
- receive and convert a call (A) for a service (70), from an application (16), into an order (O), and send the order (O) to at least one peripheral (25), and
- receive and convert data (D), from a peripheral (25), into information (I), and send the information (I) to the or at least one of the applications (16).

6. Platform (5) according to any one of the preceding claims, **characterized in that** the set of processing engines (90, 95, 105, 110, 115, 120, 125) is configured to, if data (D) corresponding to a selection by the user (10) of an area of the panel (20) are received, then:
- determine to which application (16) the selected area refers, and
- send to the corresponding application (16) information (I) of selection, by the user (10), of the area of the panel (20).

7. Platform (5) according to any one of the preceding claims, **characterized in that** the application server (15) implements a ticketing application (16A).

8. Platform (5) according to any one of the preceding claims, **characterized in that** the set of peripherals (25) comprises a contactless payment device (40) and an Ultra-Wideband transmitter (45).

9. Method for configuring the platform (5) according to any one of the preceding claims, the method being implemented by the platform manager (62) and being **characterized in that** it comprises the following successive steps:
- acquiring (520), from each peripheral (25) connected to the platform management server (60), an identifier (85) of the peripheral (25), and
- determining (530) a group (100) of services capable of being called, from an identifier (85) of each peripheral (25),
the method further comprising a calibration step (540) comprising the following sub-steps:
- displaying (542) a predefined image by sending, to the image projector (30), a projection order (OP) of the predefined image, the predefined image comprising a symbol located at a respective predefined reference point whose coordinates are known by the manager (62);
- detecting (544), by the selection sensor (35), a selection, by the user (10), of the displayed reference point;
- transmission (544), to a receiving engine (105) included in the processing engine assembly (90, 95, 105, 110, 115, 120, 125), from the selection sensor (35), of data (D) corresponding to the detected coordinates of the displayed landmark point selected by the user (10); and
- processing (546) of the data (D) by calibrating corrective parameters corresponding to a difference between the detected coordinates of the selected landmark point and the coordinates known by the platform manager (62).
